# EUROPÄISCHE PATENTSCHRIFT

(11) **EP 3 307 827 B1**
(45) Veröffentlichungstag und Bekanntmachung des Hinweises auf die Patenterteilung: **02.06.2021**
(21) Anmeldenummer: 16727503.1
(22) Anmeldetag: 07.06.2016
(51) Int. Cl.: C08L 69/00, C08L 25/12, C08L 51/04, C08K 9/04, C08K 7/14

(54) **GLASFASERVERSTÄRKTE POLYCARBONAT-FORMMASSEN MIT VERBESSERTER ZÄHIGKEIT**
GLASS FIBRE-REINFORCED POLYCARBONATE MOLDING MATERIALS WITH IMPROVED TOUGHNESS
MASSES DE FORMAGE EN POLYCARBONATE RENFORCÉES DE FIBRES DE VERRES PRÉSENTANT UNE VISCOSITÉ AMÉLIORÉE

(30) Priorität: 09.06.2015 EP 15171172
(43) Veröffentlichungstag der Anmeldung: 18.04.2018
(73) Patentinhaber: Covestro Intellectual Property GmbH & Co. KG, 51373 Leverkusen (DE)
(72) Erfinder: SEIDEL, Andreas, 41542 Dormagen (DE); PUPOVAC, Kristina, 40213 Düsseldorf (DE); HOBEIKA, Sven, 42699 Solingen (DE)
(74) Vertreter: Levpat
(86) Internationale Anmeldenummer: PCT/EP2016/062903
(87) Internationale Veröffentlichungsnummer: WO 2016/198403

(56) Entgegenhaltungen:
- WO-A1-2013/079631
- DE-A1-102007 038 438

## Beschreibung

Die Erfindung betrifft durch Glasfaserverstärkung im Zug-Elastizitätsmodul erhöhte Polycarbonat-Zusammensetzungen und Formmassen mit guter Schmelzefließfähigkeit, die sich gegenüber dem Stand der Technik durch verbesserte Zähigkeit (Schlagzähigkeit, Kerbschlagzähigkeit, Verhalten unter multi-axialer Schlagbelastung und/oder Reißdehnung) auszeichnen.

Zusammensetzungen enthaltend Polycarbonat und kautschukmodifizierte Styrol-Polymere, wie etwa ABS (Acrylnitril-Butadien-Styrol-Polymerisate), sind für ihre Ausgewogenheit an hervorragenden mechanischen Eigenschaften und guter Schmelzefließfähigkeit bekannt. Sie werden in verschiedensten Anwendungsbereichen eingesetzt, beispielsweise im Automobilbau, im Bausektor sowie in Gehäusen von Büromaschinen und Haushalts- und Elektrogeräten.

Zur Herstellung großflächiger Formteile ist in der Regel ein geringer thermischer Ausdehnungskoeffizient sowie eine gute Maßhaltigkeit und Formstabilität und eine hohe Steifigkeit erforderlich. Derartige Eigenschaften können durch Zusatz von Füll- oder Verstärkungsstoffen erzielt werden. Hohe Zug-Elastizitätsmodule können insbesondere durch Zusatz faserförmiger Verstärkungsstoffe mit hohem Aspektverhältnis, das heißt mit einem großen Quotienten aus Faserlänge und Faserdurchmesser realisiert werden. Technisch für diesen Zweck besonders attraktiv sind Glas- oder Carbonfasern, aus kommerzieller Sicht besonders bevorzugt Glasfasern, wobei Schnittfasern in der Herstellung der Compounds besonders leicht zu handhaben und daher besonders bevorzugt sind, da hierfür handelsübliche Compoundieraggregate, wie beispielsweise Ein- und Zwei-Schneckenextruder, bevorzugt mit Seitenbeschickung der Glasfasern direkt in die zuvor aufgeschmolzene und dispergierte Polymerzusammensetzung, geeignet sind. Der Zusatz der Füllstoffe und insbesondere der Zusatz von Glas- und Carbonfasern beeinflusst jedoch die Zähigkeit der Formmassen stark nachteilig. Durch diese Rahmenbedingungen sind die einsetzbaren Verstärkungsstoffe und realisierbaren Füllgrade und damit die erreichbaren Materialsteifigkeiten faktisch limitiert. Als Folge sind die Anwendungsbereiche solcher mit Füllstoffen verstärkten Polymerzusammensetzungen des Standes der Technik oft unzureichend. Insbesondere sind sehr dünnwandige großflächige Formteile und Anwendungen mit erhöhten Anforderungen an die Bauteilduktilität wie beispielsweise Struktur- oder Sicherheitsbauteile für den Automobilsektor nicht oder nur mit erhöhtem konstruktiven Aufwand mit solchen im Stand der Technik offenbarten verstärkten Polymerzusammensetzungen realisierbar. Für diese Anwendungsgebiete besteht daher die Anforderung, Polymer-Zusammensetzungen mit guter Verarbeitbarkeit im Spritzgussverfahren (hoher Schmelzefließfähigkeit) und einer Kombination aus hohem Zug-Elastizitätsmodul und einer verbesserten Duktilität nicht nur unter unidirektionaler Schlagbelastung, sondern insbesondere auch unter multi-axialer Belastung wie beispielsweise im Fallversuch bereitzustellen. Da sich aufgrund von innovativen Verarbeitungstechnologien, beispielsweise unter Einsatz von Variotherm-Spritzguss, mittlerweile selbst mit verstärkten Polymerwerkstoffen eine hervorragende Oberflächenkosmetik (Class A-Oberfläche) darstellen lässt, besteht ein zunehmender Trend darüber hinaus darin, die aus solchen Zusammensetzungen hergestellten Bauteile auch unlackiert zum Einsatz zu bringen, da sich dadurch Kosteneinsparungen realisieren lassen. Dieser Trend erfordert in bevorzugter Ausführungsform die Bereitstellung von verstärkten Polymer-Zusammensetzungen mit guter Verarbeitbarkeit und einer Kombination aus hohem E-Modul und einer verbesserten Duktilität, die ohne Notwendigkeit einer weiteren Oberflächenveredlung (Beschichtung) zudem eine gute Beständigkeit gegenüber Alterungseinflüssen wie beispielsweise Licht und Wärme und ebenfalls bevorzugt auch gegenüber Chemikalienkontakt (Spannungsrißbeständigkeit) aufweisen.

Glasfaserverstärkte Polycarbonat-Zusammensetzungen enthaltend kautschukmodifizierte Vinylcopolymerisate sind grundsätzlich aus dem Stand der Technik bereits bekannt. Die Polycarbonat-Zusammensetzungen des Standes der Technik weisen aber nicht die Kombination aller gewünschten Eigenschaftsmerkmale wie zuvor beschrieben auf. Insbesondere ermangelt es solchen Polycarbonat-Zusammensetzungen, in denen die Glasfasern in einer solchen Menge zum Einsatz kommen, dass für dünnwandige Anwendungen hinreichende Steifigkeiten erzielt werden, im Allgemeinen an einer zufriedenstellenden Materialduktilität.

EP 0 624 621 A2 offenbart Polycarbonat-Zusammensetzungen mit verbesserter Zähigkeit und Duktilität enthaltend 10 bis 80 Gew.-% Polycarbonat, 10 bis 80 Gew.-% kautschukmodifiziertes Pfropfcopolymer und 5 bis 50 Gew.-% Glasfasern mit einer Polyolefinwachs enthaltenden Beschichtung.

WO 84/04317 A1 offenbart Polycarbonat-Zusammensetzungen mit hoher Schlagzähigkeit und hohem Modul enthaltend Polycarbonat, Styrolharz, optional bis zu 10 Gew.-Teile, bezogen auf die Summe aus Polycarbonat, Styrolharz, Glasfaser und Silikon, an Schlagzähmodifikator, Glasfasern und ein Polyhydrogensiloxan, wobei es ein essentielles Kriterium dieser Erfindung ist, dass ungeschlichtete Glasfasern zum Einsatz kommen.

EP 1 802 696 A1 offenbart mit Langglasfasern verstärkte Polymer-Zusammensetzungen mit verbesserter Kombination von mechanischen Eigenschaften, insbesondere Zugfestigkeit, Zug-Elastizitätsmodul und Schlagzähigkeit, enthaltend mindestens ein Polymer ausgewählt aus der Gruppe der Polyamide, Polycarbonate, Polyestercarbonate, Pfropfpolymerisat und Copolymere sowie ein Terpolymer aus Styrol, Acrylnitril und Maleinsäureanhydrid und Langglasfasern.

WO 2009/021648 A1 und die dazugehörige DE 10 2007 038438 A1 offenbaren glasfaserverstärkte Polycarbonat-Zusammensetzungen mit hoher Steifigkeit, Schlagzähigkeit, Fließfähigkeit, Verarbeitungsstabilität, Chemikalienbeständigkeit und guter Alterungsbeständigkeit gegenüber Licht- und Wärmeeinflüssen enthaltend 10 bis 85 Gew.-Teile Polycarbonat, 10 bis 50 Gew.-Teile kautschukfreies Vinyl-Copolymerisat, 5 bis 50 Gew.-Teile Epoxy-geschlichtete Glasfasern, 0 bis 2 Gew.-Teile kautschukmodifiziertes Pfropfpolymerisat und 0 bis 10 Gew.-Teile Polymeradditive. Die in diesem Stand der Technik erfindungsgemäß verwendete Glasfaser C-1 wird im experimentellen Teil der vorliegenden Anmeldung ebenfalls als Komponente C-1 bezeichnet und in Vergleichsbeispielen eingesetzt.

Die im Stand der Technik offenbarten glasfaserverstärkten Polycarbonat-Zusammensetzungen weisen wie bereits zuvor dargestellt aber für kritische Anwendungen eine unzureichende Schmelzefließfähigkeit, Alterungsbeständigkeit, Steifigkeit und/oder Duktilität auf.

Daher lag dieser Erfindung die Aufgabe zu Grunde, leichtfließende, durch Glasfaserverstärkung im Zug-Elastizitätsmodul angehobene Polycarbonat-Formmassen mit einer gegenüber dem Stand der Technik verbesserten Zähigkeit (Schlagzähigkeit, Kerbschlagzähigkeit, Verhalten unter multi-axialer Schlagbelastung und/oder Reißdehnung) bereitzustellen, die sich zudem bevorzugt durch eine gute Beständigkeit gegenüber Alterungseinflüssen wie beispielsweise und bevorzugt Licht und Wärme sowie ebenfalls bevorzugt durch eine gute Beständigkeit gegenüber Chemikalienkontakt (Spannungsrissbeständigkeit) auszeichnen und in besonders bevorzugter Ausführungsform einen Zug-Elastizitätsmodul von mindestens 4000 MPa aufweisen.

Es wurde überraschend gefunden, dass glasfaserverstärkte, schlagzähmodifizierte PC/SAN-Zusammensetzungen enthaltend
A) 40 bis 80 Gew.-Teile, bevorzugt 50 bis 70 Gew.-Teile, besonders bevorzugt 57 bis 65 Gew.-Teile aromatisches Polycarbonat oder Polyestercarbonat, bevorzugt aromatisches Polycarbonat auf Basis von Bisphenol-A,
B) 10 bis 40 Gew.-Teile, bevorzugt 15 bis 30 Gew.-Teile, besonders bevorzugt 20 bis 25 Gew.-Teile kautschukfreies Vinylcopolymer, bevorzugt Styrol-Acrylnitril-Copolymer,
C) 5 bis 20 Gew.-Teile, bevorzugt 7 bis 15 Gew.-Teile, besonders bevorzugt 9 bis 14 Gew.-Teile organisch oberflächenmodifizierte Schnittglasfaser,
D) 0 bis 9 Gew.-Teile, bevorzugt 1 bis 8 Gew.-Teile, besonders bevorzugt 2,5 bis 6 Gew.-Teile eines Pfropfpolymerisats mit einer kautschukelastischen, bevorzugt Butadien-freien, besonders bevorzugt im Wesentlichen Kohlenstoff-Kohlenstoff-Doppelbindungs-freien Pfropfgrundlage,
E) 0 bis 20 Gew.-Teile, bevorzugt 0,1 bis 10 Gew.-Teile, besonders bevorzugt 0,2 bis 5 Gew.-Teile Additive,
wobei die Summe der Gewichtsteile der Komponenten A) bis E) in der Zusammensetzung auf 100 normiert ist,
dadurch gekennzeichnet, dass
(i) als Oberflächenmodifizierung der Glasfaser eine ggf. partiell an die Glasfaser chemisch ankoppelnde Schlichte bestehend aus einer organischen Verbindung oder einer Mischung verschiedener organischer Verbindungen in einer solchen Konzentration zum Einsatz kommt, dass der Kohlenstoffgehalt der Komponente C bei 0,2 bis 2 Gew.-%, bevorzugt bei 0,3 bis 1,0 Gew.-%, besonders bevorzugt bei 0,4 bis 0,8 Gew.-% liegt,
(ii) das Verhältnis der integrierten Peakfläche des FTIR-Spektrums im Wellenzahlbereich 2700 bis 3000 cm⁻¹ zu der integrierten Peakfläche des FTIR-Spektrums im Wellenzahlbereich von 500 bis 4000 cm⁻¹, jeweils gemessen am in Dichlormethan extrahierten Anteil dieser Schlichte der Komponente C, 0,20 bis 0,70, bevorzugt 0,25 bis 0,60, besonders bevorzugt 0,30 bis 0,55 ist,
das gewünschte Eigenschaftsprofil aufweisen.

In einer weiter bevorzugten Ausführungsform bestehen die Zusammensetzungen nur aus den Komponenten A) bis E).

In bevorzugter Ausführungsform enthalten die erfindungsgemäßen Zusammensetzungen keinerlei Butadien-basierende Polymere.

In einer weiter bevorzugten Ausführungsform basiert die Komponente D auf einer im Wesentlichen Kohlenstoff-Kohlenstoff-Doppelbindungs-freien Pfropfgrundlage.

Bei der Herstellung der erfindungsgemäßen Zusammensetzungen gemäß üblicher Compoundierungsverfahren sowie bei der weiteren formgebenden Verarbeitung (beispielsweise durch Spritzguss) werden die eingesetzten Glasfasern bedingt durch die Scherung bei diesen Prozessschritten im Allgemeinen in ihrer Länge verkürzt.

In einer bevorzugten Ausführungsform weisen die Glasfasern im hergestellten Compound (d.h. der Formmasse nach der Compoundierung) zu mindestens 70 Gew.-%, bezogen auf die Glasfasern, eine Länge von mehr als 50 µm, besonders bevorzugt von mindestens 70 µm, insbesondere von mindestens 100 µm auf.

In einer weiteren bevorzugten Ausführungsform weisen die Glasfasern auch im daraus hergestellten Formteil zu mindestens 70 Gew.-%, bezogen auf die Glasfasern, eine Länge von mehr als 50 µm, besonders bevorzugt von mindestens 70 µm, insbesondere von mindestens 100 µm auf.

Die erfindungsgemäßen Polycarbonat-Zusammensetzungen und damit auch die oben genannten Ausführungsformen weisen bevorzugt einen Elastizitätsmodul gemessen nach ISO 527 (Version von 1996) bei Raumtemperatur von mindestens 3500 MPa, besonders bevorzugt von mindestens 3800 MPa, insbesondere von mindestens 4000 MPa auf. Das gilt auch für die oben aufgeführten Ausführungsformen.

Die erfindungsgemäßen Polycarbonat-Zusammensetzungen und damit auch die oben genannten Ausführungsformen weisen bevorzugt eine Reißdehnung gemessen nach ISO 527 (Version von 1996) bei Raumtemperatur von mindestens 7%, besonders bevorzugt von mindestens 10%, insbesondere von mindestens 12% auf.

Die erfindungsgemäßen Polycarbonat-Zusammensetzungen und damit auch die oben genannten Ausführungsformen weisen bevorzugt eine Schlagzähigkeit gemessen nach ISO 180/1U (Version von 1982) bei Raumtemperatur von mindestens 50 kJ/m², besonders bevorzugt von mindestens 60 kJ/m², insbesondere von mindestens 70 kJ/m² auf.

Die erfindungsgemäßen Polycarbonat-Zusammensetzungen und damit auch die oben genannten Ausführungsformen weisen bevorzugt eine Kerbschlagzähigkeit gemessen nach ISO 180/1A (Version von 1982) bei Raumtemperatur von mindestens 8 kJ/m², besonders bevorzugt von mindestens 10 kJ/m², insbesondere von mindestens 12 kJ/m² auf.

Die erfindungsgemäßen Polycarbonat-Zusammensetzungen und damit auch die oben genannten Ausführungsformen weisen bevorzugt eine maximale schädigungsfreie Energieaufnahme (kritische Energie) bei Raumtemperatur von mindestens 2 J, bevorzugt 4 J, besonders bevorzugt 8 J bei Bestimmung gemäß der im experimentellen Teil beschriebenen Methode auf.

Die erfindungsgemäßen Polycarbonat-Zusammensetzungen und damit auch die oben genannten Ausführungsformen weisen bevorzugt eine Schmelzeviskosität gemessen nach ISO 11443 (Version von 2014) bei einer Temperatur von 260°C und einer Scherrate von 1000 s⁻¹ von maximal 270 Pas, besonders bevorzugt von maximal 250 Pas, insbesondere von maximal 230 Pas auf.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 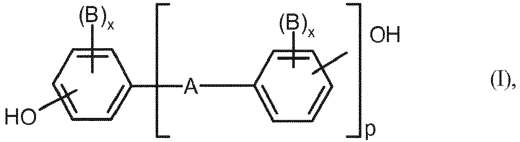 wobei
A eine Einfachbindung, C₁ bis C₅-Alkylen, C₂ bis C₅-Alkyliden, C₅ bis C₆-Cycloalkyliden, -O-,-SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III) 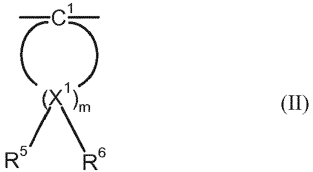 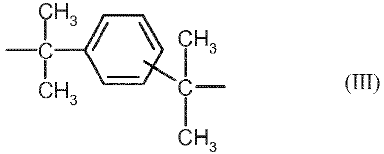
B jeweils C₁ bis C₁₂-Alkyl, vorzugsweise Methyl, Halogen, vorzugsweise Chlor und/oder Brom x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
X¹ Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.
Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

In einer bevorzugten Ausführungsform weist die Komponente A ein gewichtsgemitteltes Molekulargewicht Mw (ermittelt durch Gelpermeationschromatographie (GPC) in Methylenchlorid mit Polycarbonat als Standard). von 23,000 g/mol bis 40,000 g/mol, bevorzugt von 24,000 g/mol bis 35,000 g/mol, insbesondere von 26,000 bis 30,000 g/mol auf.

Als Komponente A kann ein Polycarbonat oder Polyestercarbonat oder eine Mischung mehrerer Polycarbonate und/oder Polyestercarbonate gemäß der Beschreibung zuvor zum Einsatz kommen.

### Komponente B

### Komponente B ist ein Vinylcopolymerisat aus

B.1 65 bis 85 Gew.-%, bevorzugt 70 bis 80 Gew.-%, insbesondere 74 bis 78 Gew.-% (jeweils bezogen auf Komponente B) mindestens eines Monomeren ausgewählt aus der Gruppe der Vinylaromaten (wie beispielsweise Styrol, α -Methylstyrol) oder kernsubstituierten Vinylaromaten (wie beispielsweise p-Methylstyrol, p-Chlorstyrol) und
B.2 15 bis 35 Gew.-%, bevorzugt 20 bis 30 Gew.-%, insbesondere 22 bis 26 Gew.% (jeweils bezogen auf Komponente B) mindestens eines Monomeren ausgewählt aus der Gruppe der Vinylcyanide (wie beispielsweise ungesättigte Nitrile wie Acrylnitril und Methacrylnitril), (Meth)Acrylsäure-(C₁-C₈)-Alkylester (wie beispielsweise Methylmethacrylat, n-Butylacrylat, tert.-Butylacrylat), ungesättigten Carbonsäuren und Derivate ungesättigter Carbonsäuren (beispielsweise Maleinsäureanhydrid und N-Phenyl-Maleinimid).

Die Copolymerisate B sind kautschukfrei. Besonders bevorzugt ist als Komponente B ein kautschukfreies Copolymer aus Styrol (B.1) und Acrylnitril (B.2).

Derartige Copolymerisate sind bekannt und lassen sich durch radikalische Polymerisation, insbesondere durch Emulsions-, Suspensions-, Lösungs- oder Massepolymerisation herstellen.

Die Copolymerisate besitzen vorzugsweise mittlere Molekulargewichte M_{w} (ermittelt per Gelpermeationschromatographie in Tetrahydrofuran mit Polystyrol als Standard) zwischen 15.000 und 250.000 g/mol, bevorzugt zwischen 50.000 und 160.000 g/mol, insbesondere zwischen 80,000 und 140.000 g/mol.

Als Komponente B kann ein Vinylcopolymerisat oder eine Mischung mehrerer Vinylcopolymerisate gemäß der Beschreibung zuvor zum Einsatz kommen.

### Komponente C

Komponente C ist eine geschlichtete Schnittglasfaser.

Diese Glasfasern gemäß Komponente C werden vorzugsweise aus E-, A- oder C-Glas hergestellt. Der mittlere Durchmesser der Glasfaser beträgt bevorzugt 5 bis 25 µm, besonders bevorzugt 6 bis 20 µm, höchst bevorzugt 7 bis 15 µm. Die Schnittglasfasern weisen eine mittlere Schnittlänge von bevorzugt 1 bis 10 mm, bevorzugt von 2,0 bis 7,5 mm, insbesondere bevorzugt von 2,5 bis 5,0 mm auf.

Besonders bevorzugt kommen Glasfasern mit einem sogenannten Aspektverhältnis, das heißt einem Quotienten aus mittlerer Faserlänge zu mittlerem Faserdurchmesser, von mindestens 100, besonders bevorzugt von mindestens 200, insbesondere bevorzugt von mindestens 300 zum Einsatz.

Die zuvor genannten geometrischen Merkmale der Glasfasern (Länge, Durchmesser und Aspektverhältnis) werden an der eingesetzten Komponente C (das heißt vor der Herstellung und weiteren thermischen Verarbeitung der erfindungsgemäßen Zusammensetzung) ermittelt. Naturgemäß kann bei der Herstellung der Zusammensetzungen durch Compoundierung und bei deren weiteren thermischen Verarbeitung zu Formteilen eine Reduktion dieses Aspektverhältnisses durch beispielsweise Scherung nicht ausgeschlossen werden, so dass die Glasfasern in der finalen Zusammensetzung oder gar im Formteil in der Regel ein geringeres Aspektverhältnis als ursprünglich an der eingesetzten Komponente C ermittelt aufweisen.

Die Glasfasern gemäß Komponente C sind mit einer Schlichte überzogen, welche mindestens eine organische Substanz oder eine Kombination mehrerer organischer Substanzen enthält, welche zum Teil chemisch an die Glasfaser gebunden sein können (Haftvermittler), zum anderen Teil frei vorliegen, d.h. ungebunden die Glasfaser physikalisch benetzen (Filmbildner, oberflächenaktive Additive, Gleitmittel, etc.). Der freie, d.h. nicht chemisch an die Glasfaser angebundene Anteil der Schlichte lässt sich mittels Extraktion, zum Beispiel und bevorzugt in Dichlormethan, separieren und einer Analytik zuführen.

Als typische Haftvermittler kommen bevorzugt reaktiv funktionalisierte Organosilane, wie sie beispielsweise in der EP 2 554 594 A1 offenbart sind, zum Einsatz. Das Silan besitzt in bevorzugter Ausführungsform eine funktionelle Gruppe ausgewählt aus der Gruppe der Amino-Gruppe, EpoxyGruppe, Carboxylsäure-Gruppe, Vinyl-Gruppe und Mercapto-Gruppe zur Anbindung an das Polymer der Schlichte, sowie eine bis drei, bevorzugt drei Alkoxy-Gruppen zur Anbindung an die Glasfaser. Beispielsweise und bevorzugt wird mindestens ein Silan eingesetzt ausgewählt aus der Gruppe bestehend aus Vinyltrichlorsilan, Vinyltriethoxysilan, Vinyltrimethoxysilan, γ-Methacryloxypropyltrimethoxysilan, β-(3,4-Epoxycyclohexyl)ethyltrimethoxysilane, γ-Glycidoxypropyltrimethoxysilan, N-β(Aminoethyl)γ-Aminopropyltrimethoxysilan, γ-Aminopropyltriethoxysilan, N-Phenyl-γ-Aminopropyltrimethoxysilan, γ-Mercaptopropyltrimethoxysilan und γ-Chloropropyltrimethoxysilan.

Als Filmbildner können jede Art von Polymeren, beispielsweise Epoxyharze, Polyesterharze, Polyolefine, Polyurethane, Silikone, Acrylpolymere, Styrol- und andere Vinyl(co)polymere, Polyamide, Polyvinylacetate und Mischungen daraus zum Einsatz kommen.
Als weitere nicht anbindende Komponenten können beispielsweise Ethoxylate, natürliche (tierische und pflanzliche), chemisch modifizierte natürliche und vollsynthetische Waxe und Öle sowie Fettsäureester, bevorzugt mit langkettigen Alkoholen zum Einsatz kommen.

Die in den erfindungsgemäßen Zusammensetzungen zum Einsatz kommenden Komponenten C zeichnen sich durch eine Schlichte geringer Polarität aus. Sie enthalten bevorzugt als wesentliche Komponenten Substanzen mit aliphatischen Kohlenwasserstoffketten und wenige oder keine funtionelle polare Gruppen.

Es werden Glasfasern verwendet, bei denen das Verhältnis der integrierten Peakfläche des FTIR-Spektrums im Wellenzahlbereich 2700 bis 3000 cm⁻¹ und zu der integrierten Peakfläche dieses Spektrums im Wellenzahlbereich von 500 bis 4000 cm⁻¹, jeweils gemessen am in Dichlormethan extrahierten Anteils dieser Schlichte der Komponente C, 0,20 bis 0,70, bevorzugt 0,25 bis 0,60 , besonders bevorzugt 0,30 bis 0,55 ist. Geeignete Glasfasern sind beispielsweise Nittobo CS 03 PE 936 (Nitto Boseki Co. Ltd., Japan) und CS 108F-14P (3B Fibreglass, Belgien).

Die Extraktion der Schnittglasfaser erfolgt in Dichlormethan. Es werden jeweils 10 g der Glasfaser in 100 ml Dichlormethan bei 40°C für 1 h extrahiert. Anschließend, wird die Lösung eingedampft und der erhaltene Rückstand auf einem KBr-Fenster mit einer spektralen Auflösung von 2 cm⁻¹ IR-spektroskopisch untersucht.

Die Schlichte (Summe aller Bestandteile) wird in einer solchen Konzentration eingesetzt, dass der Kohlenstoffgehalt der Komponente C bei 0,2 bis 2 Gew.-%, bevorzugt bei 0,3 bis 1,0 Gew.-%, besonders bevorzugt bei 0,4 bis 0,8 Gew.-% liegt.

Die Ermittlung des Kohlenstoffgehalts der Glasfaser (Komponente C) erfolgt durch Verbrennung der Glasfaser in einem Kohlenstoff/Wasserstoff/Stickstoff (CHN) Analysenautomaten bei etwa 950°C in reinem Sauerstoff gefolgt von Aliquotierung der Verbrennungsgase, Absorption der Störkomponenten und anschließende Detektion von C als CO₂ über die IR-Messzelle.

Als Komponente C kann eine Schnittglasfaser oder eine Mischung mehrerer Schnittglasfasern gemäß der Beschreibung zuvor zum Einsatz kommen.

### Komponente D

Die Komponente D umfasst ein Pfropfpolymerisat oder eine Mischung mehrerer Pfropfpolymerisate von
D.1 5 bis 70 Gew-%, vorzugsweise 10 bis 60 Gew.-%, insbesondere 20 bis 50 Gew.-%, bezogen auf die Komponente D, wenigstens eines Vinylmonomeren auf
D.2 30 bis 95 Gew.-%, vorzugsweise 40 bis 90 Gew.-%, insbesondere 50 bis 80 Gew.-%, bezogen auf die Komponente D, einer kautschukelastischen Pfropfgrundlage oder einer Mischung mehrerer kautschukelastischen Pfropfgrundlagen, bevorzugt mit Glasübergangstemperatur(en) von < 0°C, besonders bevorzugt von < -20°C, insbesondere bevorzugt von < -30°C.

Die Glasübergangstemperatur wird, sofern in der vorliegenden Erfindung nicht ausdrücklich anders beschrieben, für alle Komponenten mittels dynamischer Differenzkalorimetrie (DSC) nach DIN 53765, (Version von 1994) bei einer Heizrate von 10 K/min mit Bestimmung der Tg als Mittelpunkttemperatur (Tangentenmethode) ermittelt.

### Monomere D.1 sind vorzugsweise Gemische aus

D.1.1 50 bis 99 Gew.-%, bevorzugt 70 bis 80 Gew.-%, bezogen auf D.1, Vinylaromaten und/oder kernsubstituierten Vinylaromaten (wie Styrol, α-Methylstyrol, p-Methylstyrol, p-Chlorstyrol) und/oder Methacrylsäure-(C₁-C₈)-Alkylester, wie Methylmethacrylat, Ethylmethacrylat, und
D.1.2 1 bis 50 Gew.-%, bevorzugt 20 bis 30 Gew.-%, bezogen auf D.1, Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere D.1.1 sind ausgewählt aus mindestens einem der Monomere Styrol, α-Methylstyrol und Methylmethacrylat. Bevorzugte Monomere D.1.2 sind ausgewählt aus mindestens einem der Monomere Acrylnitril, Maleinsäureanhydrid und Methylmethacrylat. Besonders bevorzugte Monomerkombinationen sind D.1.1 Styrol und D.1.2 Acrylnitril bzw. D.1.1 und D.1.2 Methylmethacrylat.

Die für die Pfropfpolymerisate D geeigneten Pfropfgrundlagen D.2 sind in bevorzugter Ausführungsform Butadien-frei, in besonders bevorzugter Ausführungsform gesättigt, d.h. im Wesentlichen frei von Kohlenstoff-Kohlenstoff-Doppelbindungen. Im Wesentlichen frei von Kohlenstoff-Kohlenstoff-Doppelbindungen bedeutet in diesem Zusammenhang, dass die Konzentration an mehrfach ungesättigtem Vinylmonomer bei der Herstellung der Pfropfgrundlage D.2 5 Gew.-%, bevorzugt 2 Gew.-%, bezogen auf die Pfropfgrundlage D.2, nicht übersteigt.

Besonders bevorzugt ist als D.2 mindestens ein Kautschuk ausgewählt aus der Gruppe bestehend aus Acrylatkautschuken, Silikonkautschuken und Silikon-Acrylat-Kompositkautschuken.

Am meisten bevorzugt ist als Pfropfgrundlage D.2 Acrylatkautschuk.

Geeignete Acrylatkautschuke gemäß D.2 sind vorzugsweise Polymerisate aus Acrylsäurealkylestern, gegebenenfalls mit bis zu 40 Gew.-%, bezogen auf D.2 anderen polymerisierbaren, ethylenisch einfach ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können in den Acrylatkautschuken Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydros-triazin, Triallylbenzole. Die Menge der vernetzten Monomere beträgt vorzugsweise 0,02 bis 5, insbesondere 0,05 bis 2 Gew.-%, bezogen auf die Pfropfgrundlage D.2. Bei cyclischen vernetzenden Monomeren mit mindestens drei ethylenisch ungesättigten Gruppen ist es vorteilhaft, die Menge auf unter 1 Gew.-% der Pfropfgrundlage D.2 zu beschränken.

Bevorzugte "andere" polymerisierbare, ethylenisch ungesättigte Monomere, die neben den Acrylsäureestern gegebenenfalls zur Herstellung der Pfropfgrundlage D.2 dienen können, sind z.B. Acrylnitril, Styrol, α-Methylstyrol, Acrylamide, Vinyl-C₁-C₆-alkylether, Methylmethacrylat.

Weitere geeignete Pfropfgrundlagen gemäß D.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Als Pfropfgrundlage D.2 kann auch Silikon-Acrylat-Kompositkautschuk eingesetzt werden. Diese Silikon-Acrylat-Kompositkautschuke sind vorzugsweise Komposit-Kautschuke mit pfropfaktiven Stellen enthaltend 10 - 90 Gew.-% Silikonkautschuk-Anteil und 90 bis 10 Gew.-% Polyalkyl(meth)acrylatkautschuk-Anteil, wobei sich die beiden genannten Kautschuk-Komponenten im Komposit-Kautschuk gegenseitig durchdringen, so dass sie sich nicht wesentlich voneinander trennen lassen.

Silikon-Acrylat-Komposit-Kautschuke sind bekannt und beispielsweise beschrieben in US 5,807,914, EP 430134 und US 4888388.

Geeignete Silikonkautschuk-Komponenten D.2.1 der Silikon-Acrylat-Kompositkautschuke gemäß D.2 sind Silikonkautschuke mit pfropfaktiven Stellen, deren Herstellungsmethode beispielsweise in US 2891920, US 3294725, DE-OS 3 631 540, EP 249964, EP 430134 und US 4888388 beschrieben wird.

Der Silikonkautschuk gemäß D.2.1 wird bevorzugt durch Emulsionspolymerisation hergestellt, bei der Siloxan-Monomerbausteine, Vernetzungs- oder Verzweigungsmittel (IV) und gegebenenfalls Pfropfmittel (V) eingesetzt werden.

Als Siloxan-Monomerbausteine werden beispielsweise und bevorzugt Dimethylsiloxan oder cyclische Organosiloxane mit wenigstens 3 Ringgliedern, vorzugsweise 3 bis 6 Ringgliedern, wie beispielsweise und bevorzugt Hexamethylcyclotrisiloxan, Octamethylcyclotetrasiloxan, Decamethylcyclopentasiloxan, Dodecamethylcyclohexasiloxan, Trimethyl-triphenyl-cyclotri-siloxane, Tetramethyl-tetraphenyl-cyclotetrasiloxane, Octaphenylcyclotetrasiloxan eingesetzt.

Die Organosiloxan-Monomere können allein oder in Form von Mischungen mit 2 oder mehr Monomeren eingesetzt werden. Der Silikonkautschuk enthält vorzugsweise nicht weniger als 50 Gew.-% und besonders bevorzugt nicht weniger als 60 Gew.-% Organosiloxan, bezogen auf das Gesamtgewicht der Silikonkautschuk-Komponente.

Als Vernetzungs- oder Verzweigungsmittel (IV) werden vorzugsweise silanbasierende Vernetzungsmittel mit einer Funktionalität von 3 oder 4, besonders bevorzugt 4, verwendet. Beispielhaft und vorzugsweise seien genannt: Trimethoxymethylsilan, Triethoxyphenylsilan, Tetramethoxysilan, Tetraethoxysilan, Tetra-n-propoxysilan und Tetrabutoxysilan. Das Vernetzungsmittel kann allein oder in Mischung von zwei oder mehreren eingesetzt werden. Besonders bevorzugt ist Tetraethoxysilan.

Das Vernetzungsmittel wird in einem Mengenbereich zwischen 0,1 und 40 Gew.%, bezogen auf das Gesamtgewicht der Silikonkautschuk-Komponente, eingesetzt. Die Menge an Vernetzungsmittel wird so gewählt, dass der Quellungsgrad des Silikonkautschuks, gemessen in Toluol, zwischen 3 und 30 liegt, bevorzugt zwischen 3 und 25, und besonders bevorzugt zwischen 3 und 15. Der Quellungsgrad ist definiert als das Gewichtsverhältnis zwischen der Menge Toluol, die durch den Silikonkautschuk absorbiert wird, wenn er mit Toluol bei 25°C gesättigt wird, und der Menge an Silikonkautschuk im getrockneten Zustand. Die Ermittlung des Quellungsgrades ist im Detail in EP 249964 beschrieben.

Wenn der Quellungsgrad geringer als 3 ist, d.h. wenn der Gehalt an Vernetzungsmittel zu hoch ist, zeigt der Silikonkautschuk nicht ausreichend Kautschukelastizität. Wenn der Quellungsindex größer als 30 ist, kann der Silikonkautschuk keine Domänenstruktur im Matrixpolymer ausbilden und daher auch keine Schlagzähigkeit verbessern, der Effekt wäre dann ähnlich einer einfachen Zugabe von Polydimethylsiloxan.

Tetrafunktionelle Vernetzungsmittel sind bevorzugt gegenüber trifunktionellen, weil dann der Quellungsgrad einfacher kontrollierbarer innerhalb der oben beschriebenen Grenzen ist.

Als Pfropfmittel (V) geeignet sind Verbindungen, die fähig sind, Strukturen der folgenden Formeln zu bilden:

CH₂=C(R⁹)-COO-(CH₂)ₚ-SiR¹⁰ₙO_{(3-n)/2} (V-1)

CH₂=CH-SiR¹⁰ₙO_{(3-n)/2} (V-2)

oder

HS-(CH₂)ₚ-SiR¹⁰ₙO_{(3-n)/2} (V-3),

wobei
R⁹ für Wasserstoff oder Methyl stehen,
R¹⁰ für C₁-C₄-Alkyl, vorzugsweise Methyl, Ethyl oder Propyl, oder Phenyl,
n 0, 1 oder 2 und
p eine ganze Zahl von 1 bis 6 bedeuten.

Acryloyl- oder Methacryloyloxysilane sind besonders geeignet, die o.g. Struktur (V-1) zu bilden, und haben eine hohe Pfropfeffizienz. Dadurch wird eine effektive Bildung der Pfropfketten gewährleistet, und somit die Schlagzähigkeit der resultierenden Harzzusammensetzung begünstigt.
Beispielhaft und bevorzugt seien genannt: β-Methacryloyloxy-ethyldimethoxymethyl-silan, γ-Methacryloyloxy-propylmethoxydimethylsilan, γ-Methacryloyloxy-propyldimethoxymethyl-silan, γ-Methacryloyloxy-propyltrimethoxy-silan, γ-Methacryloyloxy-propylethoxydiethyl-silan, γ-Methacryloyloxy-propyldiethoxymethyl-silan, δ-Methacryloyloxy-butyldiethoxymethyl-silane oder Mischungen hieraus.

Bevorzugt werden 0 bis 20 Gew.-% Pfropfmittel bezogen auf das Gesamtgewicht des Silikonkautschuks eingesetzt.

Der Silikonkautschuk kann durch Emulsionspolymerisation hergestellt werden, wie beispielsweise in US 2891920 und US 3294725 beschrieben. Der Silikonkautschuk fällt dabei in Form eines wässrigen Latex an. Dafür wird ein Gemisch enthaltend Organosiloxan, Vernetzungsmittel und gegebenenfalls Pfropfmittel unter Scherung mit Wasser vermischt, beispielsweise durch einen Homogenisator, in Gegenwart eines Emulgators auf Sulfonsäurebasis wie z.B. Alkylbenzolsulfonsäure oder Alkylsulfonsäure, wobei die Mischung zum Silikonkautschuklatex auspolymerisiert. Besonders geeignet ist eine Alkylbenzolsulfonsäure, da sie nicht nur als Emulgator, sondern auch als Polymerisationsinitiator wirkt. In diesem Fall ist eine Kombination der Sulfonsäure mit einem Metallsalz einer Alkylbenzolsulfonsäure oder mit einem Metallsalz einer Alkylsulfonsäure günstig, weil dadurch das Polymer während der späteren Pfropfpolymerisation stabilisiert wird.

Nach der Polymerisation wird die Reaktion beendet, indem die Reaktionsmischung durch Zugabe einer wässrigen alkalischen Lösung neutralisiert wird, z.B. durch Zugabe einer wässrigen Natriumhydroxid, Kaliumhydroxid oder Natriumcarbonat-Lösung.

Geeignete Polyalkyl(meth)acrylatkautschuk-Komponenten D.2.2 der Silikon-Acrylat-Kompositkautschuke gemäß D.2 können hergestellt werden aus Methacrylsäurealkylestern und/oder Acrylsäurealkylestern, einem Vernetzungsmittel (VI) und einem Pfropfmittel (VII). Hierbei sind beispielhafte und bevorzugte Methacrylsäurealkylester und/oder Acrylsäurealkylester die C₁ bis Cs-Alkylester, beispielsweise Methyl-, Ethyl-, n-Butyl-, t-Butyl-, n-Propyl-, n-Hexyl-, n-Octyl-, n-Lauryl- und 2-Ethylhexylester; Halogenalkylester, vorzugsweise Halogen-C₁-C₈-alkylester, wie Chlorethylacrylat sowie Mischungen dieser Monomeren. Besonders bevorzugt ist n-Butylacrylat.

Als Vernetzungsmittel (VI) für die Polyalkyl(meth)acrylatkautschuk-Komponente des Silikonacrylat-Kautschuks können Monomere mit mehr als einer polymerisierbaren Doppel-bindung eingesetzt werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Propylenglykoldimethacrylat, 1,3-Butylenglykoldimethacrylat und 1,4-Butylenglykoldimethacrylat. Die Vernetzungsmittel können alleine oder in Gemischen aus mindestsens zwei Vernetzungsmitteln verwendet werden.

Beispielhafte und bevorzugte Pfropfmittel (VII) sind Allylmethacrylat, Triallylcyanurat, Triallylisocyanurat oder Mischungen hieraus. Allylmethacrylat kann auch als Vernetzungsmittel (VI) eingesetzt werden. Die Pfropfmittel können alleine oder in Gemischen aus mindestens zwei Pfropfmitteln verwendet werden.

Die Menge an Vernetzungsmittel (VI) und Pfropfmittel (VII) beträgt 0,1 bis 20 Gew.%, bezogen auf das gesamte Gewicht der Polyalkyl(meth)acrylatkautschuk-Komponente des Silikonacrylat-Kautschuks.

Der Silikonacrylat-Kompositkautschuk wird hergestellt, indem zunächst der Silikonkautschuk gemäß D.2.1 als wässriger Latex hergestellt wird. Dieser Latex wird anschließend mit den zu verwendenden Methacrylsäurealkylestern und/oder Acrylsäurealkylestern, dem Vernetzungsmittel (VI) und dem Pfropfmittel (VII) angereichert, und eine Polymerisation wird durchgeführt. Bevorzugt ist eine radikalisch initiierte Emulsionspolymerisation, beispielsweise durch einen Peroxid-, einen Azo- oder Redoxinitiator. Besonders bevorzugt ist die Verwendung eines Redoxinitiatorsystems, speziell eines Sulfoxylat-Initiatorsystems hergestellt durch Kombination von Eisensulfat, Dinatriumethylendiamintetraacetat, Rongalit und Hydroperoxid.

Das Pfropfmittel (V), das bei der Herstellung des Silikonkautschuks verwendet wird, führt dabei dazu, daß der Polyalkyl(meth)acrylatkautschuk-Anteil kovalent an den Silikonkautschuk-Anteil angebunden wird. Bei der Polymerisation durchdringen sich die beiden Kautschuk-Komponenten gegenseitig und bilden so den Komposit-Kautschuk, der sich nach der Polymerisation nicht mehr in seine Bestandteile aus Silikonkautschuk-Komponente und Polyalkyl(meth)acrylatkautschuk-Komponente trennen lässt.

Zur Herstellung der als Komponente D) genannten Silikon-Acrylat-Komposit-Pfropfkautschuke D werden die Monomere D.1 auf die Kautschuk-Grundlage D.2 aufgepfropft.

Dabei können die beispielsweise in EP 249964, EP 430134 und US 4888388 beschriebenen Polymerisationsmethoden angewendet werden.

Beispielsweise erfolgt die Pfropfpolymerisation nach folgender Polymerisationsmethode: In einer ein- oder mehrstufigen radikalisch initiierten Emulsionspolymerisation werden die gewünschten Vinylmonomere D.1 auf die Pfropfgrundlage, die als wässriger Latex vorliegt, aufpolymerisiert. Die Pfropfeffizienz soll dabei möglichst hoch sein und beträgt bevorzugt größer oder gleich 10%. Die Pfropfeffizienz hängt maßgeblich vom verwendeten Pfropfmittel (V) bzw. (VII) ab. Nach der Polymerisation zum Silikon(acrylat)-Pfropfkautschuk wird der wässrige Latex in heißes Wasser gegeben, in dem zuvor Metallsalze gelöst wurden, wie z.B. Calciumchlorid oder Magnesiumsulfat. Dabei koaguliert der Silikon(acrylat)-Pfropfkautschuk und kann anschließend separiert werden.

Die Pfropfcopolymerisate D werden durch radikalische Polymerisation bevorzugt durch Emulsionspolymerisation hergestellt.

Die Pfropfgrundlage D.2 hat im Allgemeinen eine mittlere Teilchengröße (d₅₀-Wert) von 0,05 bis 1 µm, vorzugsweise 0,07 bis 0,5 µm, besonders bevorzugt 0,1 bis 0,4 µm. Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Der Gelanteil der Pfropfgrundlage D.2 beträgt bei in Emulsionspolymerisation hergestellten Pfropfpolymerisaten bevorzugt mindestens 30 Gew.-%, besonders bevorzugt mindestens 40 Gew.-%, insbesondere mindestens 50 Gew.-% (in Toluol gemessen). Der Gelgehalt wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten D auch solche Produkte verstanden, die durch (Co)Polymerisation der Pfropfmonomere D.1 in Gegenwart der Pfropfgrundlage D.2 gewonnen werden und bei der Aufarbeitung solcher Polymerisate anfallen. Diese Produkte gemäß Komponente D können demnach auch freies, d.h. nicht chemisch an den Kautschuk gebundenes (Co)Polymerisat der Pfropfmonomere enthalten.

### Komponente E

Die Zusammensetzung kann als Komponente E des Weiteren handelsübliche Additive enthalten, wobei insbesondere und bevorzugt Additive ausgewählt aus der Gruppe der Flammschutzmittel (z.B. organische Phosphor- oder Halogenverbindungen, insbesondere Bisphenol-A basierendes Oligophosphat), Antidrippingmittel (beispielsweise Verbindungen der Substanzklassen der fluorierten Polyolefine, der Silikone sowie Aramidfasern), Flammschutzsynergisten (beispielsweise nanoskalige Metalloxide), Rauchinhibitoren (beispielsweise Zinkborat), Gleit- und Entformungsmittel (beispielsweise Pentaerythrittetrastearat), Nukleiermittel, Antistatika, Leitfähigkeitsadditive, Stabilisatoren (z.B. Hydrolyse-, Wärmealterungs- und UV-Stabilisatoren sowie Umesterungsinhibitoren und Säure-/Basenquencher), Fließfähigkeitspromotoren, Verträglichkeitsvermittler, weitere von Komponente D verschiedene Schlagzähigkeitsmodifikatoren (sowohl mit als auch ohne Kern-Schale-Struktur), weitere polymere Bestandteile (beispielsweise funktionelle Blendpartner), von Komponente C verschiedene Füll- und Verstärkungsstoffe (beispielsweise Karbonfasern, Talk, Glimmer, Kaolin, CaCO₃) sowie Farbstoffe und Pigmente (beispielsweise Titandioxid oder Eisenoxid) in Frage kommen.

### Herstellung der Formmassen (d.h. Compounds) und Formkörper

Die erfindungsgemäßen thermoplastischen Formmassen können beispielsweise hergestellt werden, indem man die jeweiligen Bestandteile in bekannter Weise vermischt und bei Temperaturen von 200°C bis 320°C, bevorzugt bei 240 bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

In einer bevorzugten Ausführungsform erfolgt die Herstellung der erfindungsgemäßen Zusammensetzungen in einem Doppelwellenextruder, wobei die Komponenten A, B, D und E zunächst aufgeschmolzen und gemischt werden und die Glasfasern C dann in das Schmelzegemisch über einen Seitenextruder eingeleitet und in diesem dispergiert werden.

Gegenstand der Erfindung ist daher auch ein Verfahren zur Herstellung der erfindungsgemäßen Zusammensetzungen.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

### Beispiele

### Komponente A-1:

Lineares Polycarbonat auf Basis Bisphenol-A mit einem gewichtsgemittelten Molekulargewicht Mw von 25.000 g/mol, bestimmt durch GPC in Methylenchlorid mit Polycarbonatstandards.

### Komponente A-2:

Lineares Polycarbonat auf Basis Bisphenol-A mit einem gewichtsgemittelten Molekulargewicht Mw von 28.000 g/mol, bestimmt durch GPC in Methylenchlorid mit Polycarbonatstandards.

### Komponente A-3:

Lineares Polycarbonat auf Basis Bisphenol-A mit einem gewichtsgemittelten Molekulargewicht Mw von 32.000 g/mol, bestimmt durch GPC in Methylenchlorid mit Polycarbonatstandards.

### Komponente B-1:

SAN-Copolymerisat mit einem Acrylnitrilgehalt von 23 Gew.-% und mit einem gewichtsgemittelten Molekulargewicht M_{w} von etwa 130.000 g/mol, bestimmt durch GPC in THF mit Polystyrolstandards.

### Komponente B-2:

SAN-Copolymerisat mit einem Acrylnitrilgehalt von 24 Gew.-% und einem gewichtsgemittelten Molekulargewicht M_{w} von etwa 170.000 g/mol, bestimmt durch GPC in THF mit Polystyrolstandards.

### Komponente C-1:

Nittobo CS 03 PE 937 (Nitto Boseki Co. Ltd., Japan): Schnittglasfaser mit einem mittleren Durchmesser von 13 µm und einer Schnittlänge von 3 mm. Der Kohlenstoffgehalt der Komponente C-1 beträgt 0.6 Gew.-% (bestimmt wie unten beschrieben).

Das Verhältnis der integrierten Peakfläche des FTIR-Spektrums im Wellenzahlbereich 2700 bis 3000 cm⁻¹ zu der integrierten Peakfläche des FTIR-Spektrums im Wellenzahlbereich von 500 bis 4000 cm⁻¹, jeweils gemessen am in Dichlormethan extrahierten Anteil dieser Schlichte der Komponente C, beträgt 0,13.

Bei dieser Glasfaser handelt es sich um die in WO 2009/021648 A1 als C-1 gekennzeichnete Komponente.

### Komponente C-2:

Nittobo CS 03 PE 936 (Nitto Boseki Co. Ltd., Japan): Schnittglasfaser mit einem mittleren Durchmesser von 13 µm und einer Schnittlänge von 3 mm. Der Kohlenstoffgehalt der Komponente C-2 beträgt 0.7 Gew.-% (bestimmt wie unten beschrieben).

Das Verhältnis der integrierten Peakfläche des FTIR-Spektrums im Wellenzahlbereich 2700 bis 3000 cm⁻¹ zu der integrierten Peakfläche des FTIR-Spektrums im Wellenzahlbereich von 500 bis 4000 cm⁻¹, jeweils gemessen am in Dichlormethan extrahierten Anteil dieser Schlichte der Komponente C, beträgt 0,53.

### Komponente C-3:

CS 108F-14P (3B Fibreglass, Belgien): Schnittglasfaser mit einem mittleren Durchmesser von 14 µm und einer Schnittlänge von 4 mm. Der Kohlenstoffgehalt der Komponente C-3 beträgt 0.5 Gew.-% (bestimmt wie unten beschrieben).

Das Verhältnis der integrierten Peakfläche des FTIR-Spektrums im Wellenzahlbereich 2700 bis 3000 cm⁻¹ zu der integrierten Peakfläche des FTIR-Spektrums im Wellenzahlbereich von 500 bis 4000 cm⁻¹, jeweils gemessen am in Dichlormethan extrahierten Anteil dieser Schlichte der Komponente C, beträgt 0,31.

### Komponente D-1:

Metablen® S2030 (Mitsubishi Rayon, Japan): Methylmethacrylat-gepfropfter Silikon-Acrylat-Kompositkautschuk.

### Komponente D-2:

KaneAceTM M410 (Kaneka, Belgien): Pfropfpolymer mit Kern-Schale-Struktur bestehend aus einem Butylacrylkautschuk als Pfropfgrundlage und einer Polymethylmethacrylat-Pfropfhülle.
**Komponente E-1:** Pentaerythrittetrastearat als Gleit-/Entformungsmittel.
**Komponente E-2:** Stabilisatormischung Irganox® B 900 (BASF, Deutschland).
**Komponente E-3:** Titandioxid, Kronos® 2233 (Kronos Titan GmbH, Deutschland).

### Herstellung und Prüfung der erfindungsgemäßen Formmassen

Das Mischen der Komponenten erfolgt auf einem Zweiwellenextruder ZSK-25 der Fa. Werner & Pfleiderer bei einer Massetemperatur von 260°C. Die Formkörper werden bei einer Massetemperatur von 260°C und einer Werkzeugtemperatur von 80°C auf einer Spritzgießmaschine Typ Arburg 270 E hergestellt.

Als Maß für die Schmelzefließfähigkeit dient die Schmelzeviskosität gemessen bei 260°C und einer Scherrate von 1000 s⁻¹ gemäß ISO 11443 (Version von 2014).

Die Schlagzähigkeit und Kerbschlagzähigkeit werden bestimmt bei 23°C gemäß ISO 180-1U (Version von 1982) bzw. ISO 180-1A (Version von 1982) an Prüfkörpern der Abmessung 80 mm x 10 mm x 4 mm.

Die Reißdehnung und der Zug-Elastizitätsmodul werden bestimmt gemäß ISO 527 (Version von 1996) bei Raumtemperatur (23°C).

Die Durchstoßversuche werden bei Raumtemperatur an Platten der Abmessung 60 mm x 60 mm x 3 mm mit einem instrumentiertem Fallwerk mit einer Fallmasse (m) von 1,86 kg, einem Dorndurchmesser von 20 mm, einem Auflagendurchmesser von 40 mm unter Variation der Fallhöhe (h = 5 - 140 cm) durchgeführt. Als Maß für die multi-axiale Materialduktilität wurde die maximale Höhe des Falldorns, bei der keine Schädigungen (Risse) der Prüfkörper auftreten, ermittelt. Die maximale Fallhöhe wird in die kritische Energie E = m·g·h umgerechnet, wobei m die Fallmasse, g die Gravitationskonstante und h die Fallhöhe darstellt.

Die Extraktion der Schnittglasfaser erfolgt in Dichlormethan. Es werden jeweils 10 g der Glasfaser in 100 ml Dichlormethan bei 40°C für 1 h extrahiert. Anschließend wird die Lösung eingedampft und der erhaltene Rückstand auf einem KBr-Fenster mit einer spektralen Auflösung von 2 cm⁻¹ IR-spektroskopisch (Messinstrument Nicolet Avatar) untersucht.

Die Ermittlung des Kohlenstoffgehalts der Glasfaser (Komponente C) erfolgte durch Verbrennung der Glasfaser in einem CHN-Automaten (Messinstrument LECO TruSpec) bei etwa 950°C in reinem Sauerstoff gefolgt von Aliquotierung der Verbrennungsgase, Absorption der Störkomponenten und anschließender Detektion von C als CO₂ über eine IR-Messzelle.

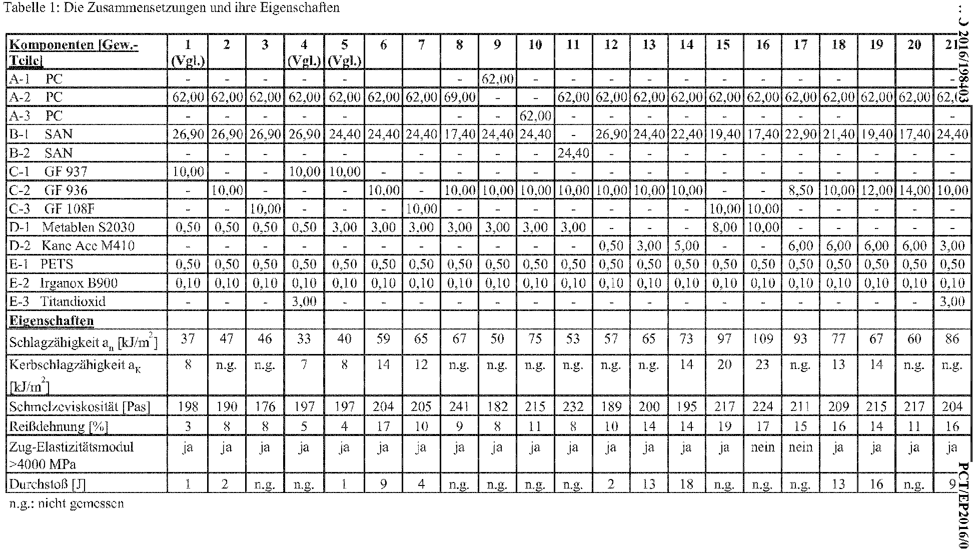

Der Tabelle 1 ist zu entnehmen, dass die erfindungsgemäßen Zusammensetzungen 2-3 und sowie 6-21 die der Erfindung zu Grunde liegende Aufgabe erfüllen.

Insbesondere ist der Tabelle zu entnehmen, dass die Beispiele 2 und 3 enthaltend erfindungsgemäße Glasfaser (Komponente C) gegenüber Vergleichsbeispiel 1 enthaltend Glasfaser, die nicht die Kriterien der Komponente C erfüllt, sowie in analoger Weise die Beispiele 6 und 7 gegenüber Vergleichsbeispiel 5 eine verbesserte Zähigkeit und Reißdehnung aufweisen, ohne dass die Schmelzefließfähigkeit in signifikanter Weise negativ beeinflusst wird.

Ein Vergleich der Beispiele 3, 7, 15 und 16 sowie ein Vergleich der Beispiele 12 bis 14 zeigt den Einfluss des Gehaltes an Pfropfpolymer (Komponente D) auf die Materialeigenschaften. Mit zunehmendem Pfropfpolymergehalt steigt die Zähigkeit an, die Schmelzefließfähigkeit nimmt zwar leicht ab, bleibt aber auf einem akzeptablen Niveau, sofern der Gehalt an Pfropfpolymer nicht zu hoch gewählt wird, und der Zug-Elastizitätsmodul nimmt ab und fällt ab einer Konzentration an Pfropfpolymer von größer 8 Gew.-Teilen unter den bevorzugt zu erzielenden Bereich von größer als 4000 MPa. Die Reißdehnung nimmt überraschend ab einem Pfropfpolymergehalt von 8 Gew.-Teilen dabei ebenfalls wieder ab.

Die Beispiele 17 bis 20 zeigen, dass die der Erfindung zu Grunde liegende Aufgabe bei Glasfaserkonzentrationen von 8,5 bis 14 Gew.-Teilen gelöst wird, wobei bei einer Konzentration von 8,5 Gew.-Teilen der bevorzugt zu erzielenden Zug-Elastizitätsmodul von größer als 4000 MPa nicht mehr erreicht wird.

Ein Vergleich der Beispiele 2 und 12 bzw. 6 und 13 zeigt den positiven Einfluss eines auf Acrylatkautschuk als Pfropfgrundlage basierenden Pfropfpolymers (Komponente D) auf die Materialzähigkeitseigenschaften.

Der Vergleich der Beispiele 6 und 8 zeigt den stark negativen Einfluss des Polycarbonat-Gehaltes auf die Schmelzefließfähigkeit und die Reißdehnung der Zusammensetzungen, wobei nur geringfügige Verbesserung der Schlagzähigkeit durch eine Erhöhung des Polycarbonat-Gehaltes realisiert wird.

Ein Vergleich der Beispiele 6, 9 und 10 zeigt den Einfluss des gewichtsgemittelten Molekulargewichtes des Polycarbonats (Komponente A). Die Schmelzviskosität nimmt erwartungsgemäß mit zunehmendem M_{w} ab und die Zähigkeit zu. Überraschender Weise jedoch wird im Bereich mittlerer Molekulargewichte eine gegenüber höheren und niedrigen Molekulargewichten verbesserte Reißdehnung beobachtet, so dass diese mittleren Molekulargewichte im Sinne der dieser Erfindung zu Grunde liegenden Aufgabe als besonders bevorzugt anzusehen sind.

Ein Vergleich von Beispielen 6 und 11 zeigt den Einfluss des gewichtsgemittelten Molekulargewichtes des SAN-Polymers (Komponente B). Überraschender Weise wird mit zunehmendem SAN-Molekulargewicht neben der zu erwartenden Verschlechterung der Schmelzefließfähigkeit auch eine Abnahme der Schlagzähigkeit und Reißdehnung beobachtet, so dass die niedrigeren Molekulargewichte im Sinne der dieser Erfindung zu Grunde liegenden Aufgabe als besonders bevorzugt anzusehen sind.

Ein Vergleich der Vergleichsbeispiele 1 und 4 gemäß dem Stand der Technik mit den erfindungsgemäßen Beispielen 13 und 21 zeigt, dass die erfindungsgemäßen Zusammensetzung ihre Schlagzähigkeit auch bei Einfärbung mittels anorganischer Pigmente (hier exemplarisch Titandioxid) erhalten bzw. diese sogar durch Pigmentzusatz überraschender Weise noch gesteigert werden kann, während die Zusammensetzungen gemäß dem Standes der Technik bei Einfärbung durch anorganische Pigmente stark in ihrer Schlagzähigkeit leiden.

## Patentansprüche

1. Zusammensetzungen enthaltend
A) 40 bis 80 Gew.-Teile aromatisches Polycarbonat oder Polyestercarbonat,
B) 10 bis 40 Gew.-Teile kautschukfreies Vinylcopolymer,
C) 5 bis 20 Gew.-Teile organisch oberflächenmodifizierte Schnittglasfaser,
D) 0 bis 9 Gew.-Teile eines Pfropfpolymerisats mit einer kautschukelastischen Pfropfgrundlage,
E) 0 bis 20 Gew.-Teile Additive,
wobei die Summe der Gewichtsteile der Komponenten A) bis E) in der Zusammensetzung auf 100 normiert ist,
**dadurch gekennzeichnet, dass**
(i) als Oberflächenmodifizierung der Glasfaser eine Schlichte bestehend aus einer organischen Verbindung oder einer Mischung verschiedener organischer Verbindungen in einer solchen Konzentration zum Einsatz kommt, dass der Kohlenstoffgehalt der Komponente C bei 0,2 bis 2 Gew.-% liegt,
(ii) das Verhältnis der integrierten Peakfläche des FTIR-Spektrums im Wellenzahlbereich 2700 bis 3000 cm⁻¹ zu der integrierten Peakfläche des FTIR-Spektrums im Wellenzahlbereich von 500 bis 4000 cm⁻¹, jeweils gemessen am in Dichlormethan extrahierten Anteil dieser Schlichte der Komponente C, 0,20 bis 0,70 ist.

2. Zusammensetzungen gemäß Anspruch 1 enthaltend,
A) 57 bis 65 Gew.-Teile aromatisches Polycarbonat oder Polyestercarbonat,
B) 20 bis 25 Gew.-Teilekautschukfreies, thermoplastisches und harzartiges Vinylcopolymer,
C) 9 bis 14 Gew.-Teile organisch oberflächenmodifizierte Schnittglasfaser,
D) 2,5 bis 6 Gew.-Teile eines Pfropfpolymerisats mit einer kautschukelastischen Pfropfgrundlage,
E) 0,2 bis 5 Gew.-Teile Additive,
wobei die Summe der Gewichtsteile der Komponenten A) bis E) in der Zusammensetzung auf 100 normiert ist.

3. Zusammensetzungen gemäß einem der vorherigen Ansprüche, **dadurch gekennzeichnet, dass** der Kohlenstoffgehalt der Komponente C bei 0,4 bis 0,8 Gew.-% liegt.

4. Zusammensetzungen gemäß einem der vorherigen Ansprüche, **dadurch gekennzeichnet, dass** das Verhältnis der integrierten Peakfläche des FTIR-Spektrums im Wellenzahlbereich 2700 bis 3000 cm⁻¹ zu der integrierten Peakfläche des FTIR-Spektrums im Wellenzahlbereich von 500 bis 4000 cm⁻¹, jeweils gemessen am in Dichlormethan extrahierten Anteil dieser Schlichte der Komponente C, 0,25 bis 0,60 ist.

5. Zusammensetzungen gemäß einem der vorherigen Ansprüche, **dadurch gekennzeichnet, dass** das Verhältnis der integrierten Peakfläche des FTIR-Spektrums im Wellenzahlbereich 2700 bis 3000 cm⁻¹ zu der integrierten Peakfläche des FTIR-Spektrums im Wellenzahlbereich von 500 bis 4000 cm⁻¹, jeweils gemessen am in Dichlormethan extrahierten Anteil dieser Schlichte der Komponente C, 0,30 bis 0,55 ist.

6. Zusammensetzungen gemäß einem der vorherigen Ansprüche, **dadurch gekennzeichnet, dass** die Pfropfgrundlage der Komponente D ausgewählt ist aus mindestens einem Vertreter aus der Gruppe bestehend aus Silikonkautschuk, Acrylatkautschuk und Silikon-Acrylat-Kompositkautschuk.

7. Zusammensetzungen gemäß einem der vorherigen Ansprüche, **dadurch gekennzeichnet, dass** die Pfropfgrundlage der Komponente D Acrylatkautschuk ist.

8. Zusammensetzungen gemäß einem der vorherigen Ansprüche, **dadurch gekennzeichnet, dass** die Glasfasern im hergestellten Compound zu mindestens 70 Gew.-% eine Länge von mindestens 100 µm aufweisen.

9. Zusammensetzungen gemäß einem der vorherigen Ansprüche, **dadurch gekennzeichnet, dass** die Komponente E in einem Anteil von mindestens 0,1 Gew.-Teilen enthalten ist und mindestens ein anorganisches Pigment enthält.

10. Zusammensetzungen gemäß einem der vorherigen Ansprüche, **dadurch gekennzeichnet, dass** als Komponente B ein Styrol-Acrylnitril-Copolymer mit einem gewichtsgemittelten Molekulargewicht von nicht mehr als 140.000 g/mol, bestimmt durch Gelpermationschromatographie in THF mit Polystyrolstandards, eingesetzt wird.

11. Zusammensetzungen gemäß einem der vorherigen Ansprüche, **dadurch gekennzeichnet, dass** als Komponente A ein Polycarbonat auf Basis von Bisphenol-A mit einem gewichtsgemittelten Molekulargewicht von 26.000 bis 30.000 g/mol, bestimmt durch Gelpermationschromatographie in Dichlormethan mit Polycarbonatstandards, eingesetzt wird.

12. Zusammensetzungen gemäß einem der vorhergehenden Ansprüche, enthaltend als Komponente E mindestens einen Zusatzstoff ausgewählt aus der Gruppe, die Flammschutzmittel, Antidrippingmittel, Flammschutzsynergisten, Rauchinhibitoren, Gleit- und Entformungsmittel, Nukleiermittel, Antistatika, Leitfähigkeitsadditive, Stabilisatoren, Fließfähigkeitspromotoren, Verträglichkeitsvermittler, weitere von Komponente D verschiedene Schlagzähigkeitsmodifikatoren, weitere polymere Blendpartner, von Komponente C verschiedene Füll- und Verstärkungsstoffe sowie Farbstoffe und Pigmente umfasst.

13. Zusammensetzungen gemäß einem der vorherigen Ansprüche, **dadurch gekennzeichnet, dass** die Zusammensetzungen nur aus den Komponenten A) bis E) bestehen.

14. Verwendung von Zusammensetzungen gemäß einem der Ansprüche 1 bis 13 zur Herstellung von spritzgegossenen oder thermogeformten Formkörpern.

15. Formkörper erhältlich aus Zusammensetzungen gemäß einem der Ansprüche 1 bis 13.

## Claims

1. Compositions comprising
A) from 40 to 80 parts by weight of aromatic polycarbonate or polyester carbonate,
B) from 10 to 40 parts by weight of rubber-free vinyl copolymer,
C) from 5 to 20 parts by weight of organically surface-modified chopped glass fibre,
D) from 0 to 9 parts by weight of a graft polymer with an elastomeric graft base,
E) from 0 to 20 parts by weight of additives,
where the sum of the parts by weight of components A) to E) in the composition is standardized to 100, **characterized in that**
(i) a size composed of an organic compound or a mixture of various organic compounds is used as surface-modification of the glass fibre at a concentration such that the carbon content of component C is from 0.2 to 2% by weight,
(ii) the ratio of the integrated peak area of the FTIR spectrum in the wave number range from 2700 to 3000 cm⁻¹ to the integrated peak area of the FTIR spectrum in the wave number range from 500 to 4000 cm⁻¹, in each case measured on the dichloromethane-extracted content of this size of component C, is from 0.20 to 0.70.

2. Compositions according to Claim 1 comprising
A) from 57 to 65 parts by weight of aromatic polycarbonate or polyester carbonate,
B) from 20 to 25 parts by weight of rubber-free, thermoplastic and resin-like vinyl copolymer,
C) from 9 to 14 parts by weight of organically surface-modified chopped glass fibre,
D) from 2.5 to 6 parts by weight of a graft polymer with an elastomeric graft base,
E) from 0.2 to 5 parts by weight of additives,
where the sum of the parts by weight of components A) to E) in the composition is standardized to 100.

3. Compositions according to any of the preceding claims, **characterized in that** the carbon content of component C is from 0.4 to 0.8% by weight.

4. Compositions according to any of the preceding claims, **characterized in that** the ratio of the integrated peak area of the FTIR spectrum in the wave number range from 2700 to 3000 cm⁻¹ to the integrated peak area of the FTIR spectrum in the wave number range from 500 to 4000 cm⁻¹, in each case measured on the dichloromethane-extracted content of this size of component C, is from 0.25 to 0.60.

5. Compositions according to any of the preceding claims, **characterized in that** the ratio of the integrated peak area of the FTIR spectrum in the wave number range from 2700 to 3000 cm⁻¹ to the integrated peak area of the FTIR spectrum in the wave number range from 500 to 4000 cm⁻¹, in each case measured on the dichloromethane-extracted content of this size of component C, is from 0.30 to 0.55.

6. Compositions according to any of the preceding claims, **characterized in that** the graft base of component D is selected from at least one member of the group consisting of silicone rubber, acrylate rubber and silicone-acrylate composite rubber.

7. Compositions according to any of the preceding claims, **characterized in that** the graft base of component D is acrylate rubber.

8. Compositions according to any of the preceding claims, **characterized in that** the length of at least 70% by weight of the glass fibres in the compounded material produced is at least 100 µm.

9. Compositions according to any of the preceding claims, **characterized in that** the proportion present of component E is at least 0.1 part by weight and component E comprises at least one inorganic pigment.

10. Compositions according to any of the preceding claims, **characterized in that** a styrene-acrylonitrile copolymer with weight-average molar mass not more than 140 000 g/mol, determined by gel permeation chromatography in THF with polystyrene standards, is used as component B.

11. Compositions according to any of the preceding claims, **characterized in that** a polycarbonate based on bisphenol A with weight-average molar mass from 26 000 to 30 000 g/mol, determined by gel permeation chromatography in dichoromethane with polycarbonate standards, is used as component A.

12. Compositions according to any of the preceding claims, comprising, as component E, at least one additional substance selected from the group comprising flame retardants, antidripping agents, flame retardant synergists, smoke inhibitors, lubricants and mould-release agents, nucleating agents, antistatic agents, conductivity additives, stabilizers, flowability promoters, compatibilizers, other impact modifiers differing from component D, other polymeric blend partners, fillers differing from component C, reinforcing materials differing from component C, dyes and pigments.

13. Compositions according to any of the preceding claims, **characterized in that** the compositions are composed only of components A) to E).

14. Use of compositions according to any of Claims 1 to 13 for the production of injection mouldings or thermoformed mouldings.

15. Mouldings obtainable from compositions according to any of Claims 1 to 13.

## Revendications

1. Compositions contenant
A) 40 à 80 parties en poids d'un polycarbonate ou polyestercarbonate aromatique,
B) 10 à 40 parties en poids d'un copolymère de vinyle exempt de caoutchouc,
C) 5 à 20 parties en poids d'une fibre de verre coupée modifiée en surface de manière organique,
D) 0 à 9 parties en poids d'un polymérisat greffé comportant une base de greffage élastique comme du caoutchouc,
E) 0 à 20 parties en poids d'additifs,
la somme des parties en poids des composants A) à E) dans la composition étant normalisée à 100,
**caractérisées en ce que**
(i) en tant que modification de surface de la fibre de verre, un enduit constitué d'un composé organique ou d'un mélange de composés organiques différents est utilisé en une telle concentration que la teneur en carbone du composant C se situe de 0,2 à 2 % en poids,
(ii) le rapport des surfaces de pic intégrées du spectre de FTIR dans le domaine de longueur d'onde de 2 700 à 3 000 cm⁻¹ sur les surfaces de pic intégrées du spectre de FTIR dans le domaine de longueur d'onde de 500 à 4 000 cm⁻¹, à chaque fois mesurées sur la partie extraite dans le dichlorométhane de cet enduit du composant C, est de 0,20 à 0,70.

2. Compositions selon la revendication 1 contenant,
A) 57 à 65 parties en poids d'un polycarbonate ou polyestercarbonate aromatique,
B) 20 à 25 parties en poids d'un copolymère de vinyle exempt de caoutchouc, thermoplastique et résineux,
C) 9 à 14 parties en poids d'une fibre de verre coupée modifiée en surface de manière organique,
D) 2,5 à 6 parties en poids d'un polymérisat greffé comportant une base de greffage élastique comme du caoutchouc,
E) 0,2 à 5 parties en poids d'additifs,
la somme des parties en poids des composants A) à E) dans la composition étant normalisée à 100.

3. Compositions selon l'une quelconque des revendications précédentes, **caractérisées en ce que** la teneur en carbone du composant C se situe de 0,4 à 0,8 % en poids.

4. Compositions selon l'une quelconque des revendications précédentes, **caractérisées en ce que** le rapport des surfaces de pic intégrées du spectre de FTIR dans le domaine de longueur d'onde de 2 700 à 3 000 cm⁻¹ sur les surfaces de pic intégrées du spectre de FTIR dans le domaine de longueur d'onde de 500 à 4 000 cm⁻¹, à chaque fois mesurées sur la partie extraite dans le dichlorométhane de cet enduit du composant C, est de 0,25 à 0,60.

5. Compositions selon l'une quelconque des revendications précédentes, **caractérisées en ce que** le rapport des surfaces de pic intégrées du spectre de FTIR dans le domaine de longueur d'onde de 2 700 à 3 000 cm⁻¹ sur les surfaces de pic intégrées du spectre de FTIR dans le domaine de longueur d'onde de 500 à 4 000 cm⁻¹, à chaque fois mesurées sur la partie extraite dans le dichlorométhane de cet enduit du composant C, est de 0,30 à 0,55.

6. Compositions selon l'une quelconque des revendications précédentes, **caractérisées en ce que** la base de greffage du composant D est choisie parmi au moins un représentant du groupe constitué par un caoutchouc de silicone, un caoutchouc d'acrylate et un caoutchouc composite de silicone-acrylate.

7. Compositions selon l'une quelconque des revendications précédentes, **caractérisées en ce que** la base de greffage du composant D est un caoutchouc d'acrylate.

8. Compositions selon l'une quelconque des revendications précédentes, **caractérisées en ce qu'**au moins 70 % en poids des fibres de verre dans le compound préparé présentent une longueur d'au moins 100 µm.

9. Compositions selon l'une quelconque des revendications précédentes, **caractérisées en ce que** le composant E est contenu en une proportion d'au moins 0,1 partie en poids et contient au moins un pigment inorganique.

10. Compositions selon l'une quelconque des revendications précédentes, **caractérisées en ce qu'**un copolymère de styrène-acrylonitrile doté d'un poids moléculaire moyen en poids non supérieur à 140 000 g/mole, déterminé par chromatographie à perméation de gel dans le THF avec des références de polystyrène, est utilisé en tant que composant B.

11. Compositions selon l'une quelconque des revendications précédentes, **caractérisées en ce qu'**un polycarbonate à base de bisphénol A doté d'un poids moléculaire moyen en poids de 26 000 à 30 000 g/mole, déterminé par chromatographie à perméation de gel dans le dichlorométhane avec des références de polycarbonate, est utilisé en tant que composant A.

12. Compositions selon l'une quelconque des revendications précédentes, contenant en tant que composant E au moins un adjuvant choisi dans le groupe qui comprend des agents ignifugeants, des agents anti-égouttement, des synergistes d'ignifugation, des inhibiteurs de fumée, des agents glissants et de démoulage, des agents de nucléation, des antistatiques, des additifs de conductivité, des stabilisants, des promoteurs d'écoulement, des agents compatibilisants, d'autres modificateurs de résistance aux chocs différents du composant D, d'autres partenaires de mélange polymériques, des charges et des matières de renforcement différentes du composant C ainsi que des colorants et des pigments.

13. Compositions selon l'une quelconque des revendications précédentes, **caractérisées en ce que** les compositions ne sont constituées que des composants A) à E) .

14. Utilisation de compositions selon l'une quelconque des revendications 1 à 13 pour la préparation de corps moulés moulés par injection ou thermoformés.

15. Corps moulés pouvant être obtenus à partir des compositions selon l'une quelconque des revendications 1 à 13.
